(19) Europäisches Patentamt
European Patent Office
Office européen des brevets

(11) Publication number: **0 046 386**
**B1**

(12) # EUROPEAN PATENT SPECIFICATION

(45) Date of publication of patent specification: **02.10.85**

(51) Int. Cl.⁴: **C 08 L 63/10**, C 08 K 5/15, C 08 F 283/10

(21) Application number: **81303716.5**

(22) Date of filing: **14.08.81**

(54) **Vinyl ester resin compositions.**

(30) Priority: **14.08.80 US 178149**

(43) Date of publication of application:
**24.02.82 Bulletin 82/08**

(45) Publication of the grant of the patent:
**02.10.85 Bulletin 85/40**

(84) Designated Contracting States:
**AT BE CH DE FR GB IT LI LU NL SE**

(56) References cited:
**DE-B-1 161 014**

(73) Proprietor: **MILLIKEN RESEARCH CORPORATION**
**Iron Ore Road**
***Spartanburg South Carolina 29304 (US)***

(72) Inventor: **Miley, John Wulbern**
**Route 7 Box 180 Inman**
**Spartanburg South Carolina 29349 (US)**

(74) Representative: **Perry, Robert Edward et al**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 046 386 B1**

**Description**

The present invention relates to compositions comprising a vinyl ester resin and a thixotropy-imparting material.

The so-called "vinyl ester" class of resins has for some years been recognized as useful for a wide range of resin applications, especially those demanding superior chemical resistance. The resins are chemically the reaction products of epoxy resins and ethylenically unsaturated monocarboxylic acids. Typical vinyl ester resins now commercially available include the EPOCRYL® resins (marketed by Shell Chemical Company), DERAKANE® 411 (marketed by Dow Chemical Company) and CO—REZYN® VE—8300 (marketed by Interplastic Company).

In the use of vinyl ester resins to prepare shaped products, in particular fibreglass-reinforced plastic (FRP) structures, the viscosity of the resin composition should be controlled so that the composition is fluid enough to allow easy application and good wetting of fillers and reinforcements, yet not so fluid that it drains from vertical surfaces to cause resin-starved areas in the shaped product. Moreover, in many uses, for instance where shaped products such as pipes, tanks, scrubbers or ducts are prepared using a vinyl ester resin, excellent body and hold-up characteristics are very important if not critical to the procedure, especially during the shaping and curing steps. In such applications, the resin is typically dissolved in a vinyl monomer, e.g., styrene, whereupon it is shaped and cured to produce shaped products. If, during the shaping and curing steps, the body and hold-up characteristics of the composition are such that outflow or running of the composition occurs when, for instance, the resin composition is applied onto a vertical surface for lining, the resin surface of the shaped product may be of uneven thickness and have diminished mechanical strength.

It has previously been proposed to improve the viscosity, body and hold-up characteristics of vinyl ester resins by adding certain thixotropic agents. It has been reported that Cab—O—Sil® M—5 (a fumed silica product manufactured by Cabot Corporation) and Calidria® RG—244 (an asbestos product manufactured by Union Carbide) are "extremely effective" thixotroping additives in certain vinyl ester resin compositions, namely EPOCRYL® Resins 21, DRH—321 and DRH—322 (see "Unsaturated Polyester Technology" edited by Paul F. Bruins; Gordon and Breach Science Publishers). While the known thixotroping additives for vinyl ester resin compositions have provided products which have achieved a fair measure of commercial success, these known additives exhibit certain drawbacks in vinyl ester resin compositions and they may fail effectively to prevent outflow or running of the resin. The fumed silica product requires the presence of relatively large amounts of the thixotroping additive in the resin composition to achieve the desired thixotroping effect; such a concentration may adversely affect the chemical resistance of the product, especially its resistance to basic materials. While the asbestos-containing product may provide a relatively high thixotropic index at low concentrations of added thixotrope, its use is being discouraged and may even be prohibited by law, owing to the recently-recognised carcinogenic properties associated with asbestos and asbestos-containing materials.

According to the present invention, a composition comprises a vinyl ester resin made by condensing an epoxy resin and an ethylenically unsaturated monocarboxylic acid; and a condensation product of a sugar alcohol and an aromatic aldehyde.

A composition of the invention can exhibit good thixotropic properties, even at low concentrations of the thixotroping condensation product. The novel compositions can also have excellent chemical resistance, even to basic chemicals. By means of the invention, curable and cured vinyl ester resins are provided with a non-toxic and safe thixotroping additive that may be handled without special precautions during processing. The present invention allows the production of shaped products of vinyl ester resins free from undesired outflow or running of the resins, even at relatively low concentrations of the added thixotrope.

A composition of the present invention preferably comprises from 0.1 to 10, more preferably 0.3 to 5% by weight of the condensation product. It is preferred that the sugar alcohol from which the product is derived is selected from pentahydric, hexahydric and heptahydric alcohols. Examples are xylitol, sorbitol, α-glucoheptitol, and their homologues in various isomeric forms. Examples of aromatic aldehydes which may be condensed with the sugar alcohol include benzaldehyde, ortho-, para- and meta-tolualdehyde, anisaldehyde and benzaldehydes having 1 to 3 substituents selected from amino groups, nitro groups and halogen atoms.

The thixotroping additives may be conveniently prepared by means of a variety of known techniques, such as, for instance, that disclosed in U.S. Patent Specification No. 3,767,729. In general, the preparation may be accomplished by condensing the sugar alcohol, e.g. sorbitol, with the aromatic aldehyde in the presence of an acidic catalyst. A preferred category of thixotroping additives are the benzylidene sorbitols, which may be made by condensing sorbitol with benzaldehyde. By adjusting the molar ratio of benzaldehyde to sorbitol, monobenzylidene sorbitol, dibenzylidene sorbitol and tribenzylidene sorbitol can be produced selectively. Any of these benzylidene sorbitols can be used in the invention, if desired in admixture with one another. Therefore, even when a mixture of benzylidene sorbitols is produced, there is no need to isolate them. The most preferred condensation products are dibenzylidene sorbitol, mixtures of monobenzylidene sorbitol and dibenzylidene sorbitol, and mixtures of dibenzylidene sorbitol and tribenzylidene sorbitol.

A composition of the present invention may comprise an adjuvant, in order to facilitate handling, cure and to provide desired mechanical properties. Suitable compatible adjuvants include reactive, ethylenically unsaturated comonomers such as styrene, chlorostyrene, vinyltoluenes, methylstyrene, diallyl phthalate, triallyl cyanurate, acrylate esters, methacrylate esters and divinylbenzene. Styrene is the preferred compatible adjuvant. The compositions may also comprise a non-reactive diluent, such as acetone, where low application viscosity is required but where properties obtainable only with the neat resin are desired.

The vinyl ester resins used in the present invention may be any of those known in the art and may be prepared by an addition reaction between an epoxy resin and an ethylenically unsaturated monocarboxylic acid. Processes for preparing suitable vinyl ester resins are disclosed in U.S. Patent Specifications Nos. 3,256,226; 3,317,465; 3,345,401; 3,373,221; 3,377,406; 3,432,478; 3,548,030; 3,564,074; 3,634,542 and 3,637,618.

In general, the reaction by means of which the vinyl ester resins used in the present invention are prepared is straightforward. It may be catalysed by suitable catalysts such as, for instance, tertiary amines, phosphines, alkalis or -onium salts. The general equation for the reaction may be represented as follows:

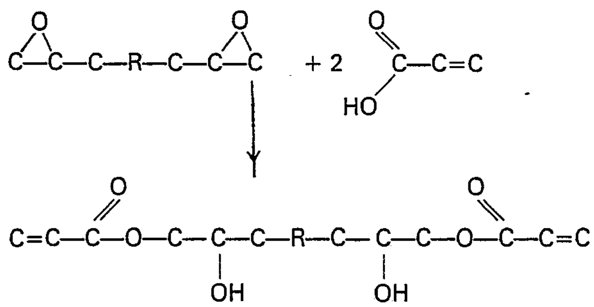

wherein R is, for instance, alkylene, cycloalkylene, arylene, arylalkylene, oxyarylene, oxyarylalkylene or cycloalkylene ester.

Suitable acids are acrylic, methacrylic, crotonic and cinnamic acids. Suitable epoxy resins are the following:

BPA Epoxy

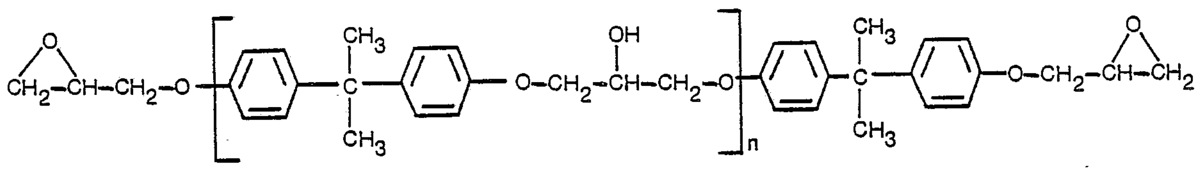

Epoxy Novalac

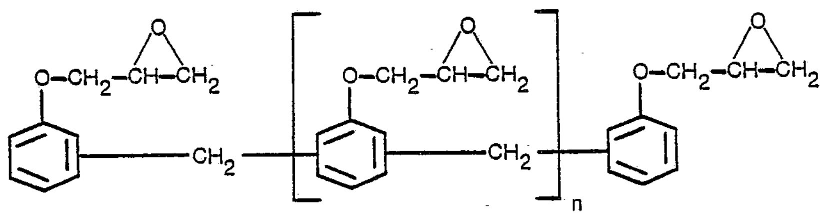

Tetraphenylolethane Epoxy

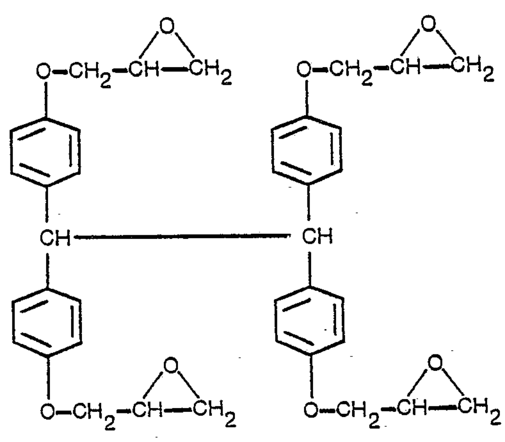

Cycloaliphatic Epoxy

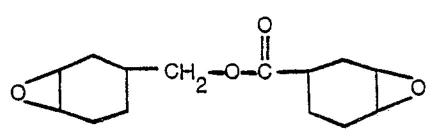

A substantial number of different vinyl ester resins having distinct characteristics may be prepared by combining different epoxy resins with various unsaturated acids. The variety of products may of course be even further extended, depending upon the selection of the unsaturated monomers which can be combined, and copolymerised, with the vinyl ester resin. The vinyl ester resins which have so far achieved the greatest utility and which are therefore preferred for use in the present invention are the bisphenol-A (BPA)-epoxy based vinyl ester resins. These resins may be employed in the compositions of the present invention either with or without a co-reactive monomer such as styrene.

The BPA-epoxy based vinyl ester resins provide the convenience and practical handling properties of ambient temperature-cure polyester systems, yet they exhibit the excellent physical/mechanical properties associated with well-cured epoxy resin systems. They thus combine the desired properties of two different thermosetting resins into a single resin system.

The vinyl ester resin systems of the present invention possess excellent physical, mechanical and handling properties. These properties may be attributed to their molecular structure.

These products, representing a successful marriage of epoxies and polyesters, may exhibit characteristics of each. Within the epoxy resin moiety, the aromatic rings may provide good mechanical properties and heat resistance. The ether linkages may contribute to good chemical resistance. The pendant hydroxyl groups may provide adhesion and reactive sites for further modification, as for example by reaction with anhydrides or isocyanates. Substituents may be provided at the hydroxyl sites and may alter properties to suit specific end use application requirements. The pendant hydroxyl groups probably also enhance the reactivity of the double bond. The unsaturated acid groups may provide reactive sites for crosslinking and may afford to the products some or all of the cure characteristics of polyester resins.

Substituents within the acid moiety may also affect the chemical resistance. For instance, the methyl group of methacrylic acid stabilises the ester group towards hydrolysis, and for this reason the methacrylate vinyl esters may be more resistant to chemical attack than are the acrylate vinyl ester resins.

In general, $R^1$ in a group —CO—$CR^1$=C— in the resin may be hydrogen or, for example, $C_{1-6}$ alkyl, e.g. methyl, ethyl or propyl. *n* in the above resin formulae, or in general the number of monomeric units, may be from 1 to 5.

Terminal location of the ester groups may contribute to the superior chemical resistance of the resins. The recurring ester groups along the backbone of a typical bisphenol-A-fumarate polyester, for instance, are the most vulnerable part of the resin since they are subject to hydrolysis. Once hydrolysed, the polymer chain is broken, leaving it susceptible to further chemical attach. However, the vinyl esters contain only terminal ester groups, and the number of ester groups is less than in BPA-fumarate polyesters. Thus there are fewer vulnerable sites in the vinyl ester resin. Further, attack at these terminal sites leaves the backbone of the molecule unaffected. As mentioned above, substituents on the acid moiety, such as the methyl group of methacrylic acid, may also protect the ester group against hydrolysis.

The thixotropy-imparting condensation product used in the invention may be added to the vinyl ester resin composition by means of a wide range of addition techniques. One convenient means of addition comprises first dissolving the thixotropy-imparting material in a suitable solvent which is compatible with the vinyl ester resin. Suitable solvents include, for instance, dimethylformamide and dimethyl sulfoxide. In addition to the vinyl ester resin, thixotroping additive and, if desired, a reactive or non-reactive diluent, the resin compositions of the present invention may also comprise catalysts, inhibitors, fillers, pigments and/or other known conventional additives.

Compositions of the invention may be polymerised and cross-linked, using free radical generating initiators which are known in the art. Polymerisation of the resin is by means of a true addition reaction and, typically, no by-products are formed. Suitable initiators include peroxides, preferably organic peroxides such as benzoyl peroxide or methyl ethyl ketone peroxide, as well as other sources of free radicals. For example, photoinitiators which generate free radicals may also be used to initiate polymerisation of the compositions of the present invention. The initiator may be used with conventional accelerators or promoters such as, for instance, tertiary amines, e.g. dimethyl or diethyl aniline, and metallic soaps such as cobalt or manganese octoate or naphthenate.

Various shaping methods may be employed to shape the resin composition. Suitable methods include the hand lay-up method, the spray-up method, the cold-press method, the bag method, the matched-die method, the filament-winding method and the continuous moulding method.

The following Examples illustrate the invention, except Examples 5 and 17 which are comparative. Unless otherwise indicated, all parts and percentages are by weight. Viscosity measurements are in mPa·s.

## Examples 1 to 5

In Examples 1 to 4, essentially pure dibenzylidene sorbitol (DBS) was added in varying amounts to EPOCRYL® Resin 322—45 (a bisphenol-A epoxy-based vinyl ester resin terminated with methacrylate ester groups). The resin is supplied in a 45% styrene solution and has a viscosity of about 700 mPa·s at 25°C.

The DBS (which was prepared as described in U.S. Patent Specification No. 3,767,729) was first made into a 15% solution of the DBS in dimethylformamide. The DBS solution was added to the resin using a Fisher Dynamix electric stirrer at a setting of 10 which provided a speed of about 300 rpm. After addition, the viscosity of the solution was measured at 25°C using a Brookfield Model RVF Viscometer at 2 and 20 rpm. The viscosity index (VI) was determined as the ratio of the viscosity of the solution at the two speeds, the value at 2 rpm being divided by that at 20 rpm. Viscosity data were collected after one hour, 16 hours and 19 days from the preparation of the solution. In Example 5, viscosity information was determined for a control sample of the resin containing no DBS. The results are given in Table 1, the VI values showing the absolute viscosity measurements as the ratio expressed above.

TABLE 1

| Example | %DBS | VI (1 Hr) | VI (16 Hr) | VI (19 days) |
|---|---|---|---|---|
| 1 | 0.15 | 650/590 = 1.1 | 700/625 = 1.1 | 700/655 = 1.1 |
| 2 | 0.25 | 800/670 = 1.2 | 1550/1270 = 1.2 | 2350/1460 = 1.6 |
| 3 | 0.35 | 4600/2185 = 2.1 | 7200/3110 = 2.3 | 9900/3780 = 2.6 |
| 4 | 0.50 | 18000/6020 = 3.0 | 22600/7420 = 3.0 | 31800/11180 = 2.8 |
| 5 | 0 | 750/655 = 1.1 | | |

Examples 6 to 8

In Examples 6 to 8, the vinyl ester resin employed was Dow's Derakane® Resin 411—45 (a biphenol-A-based vinyl ester resin having methacrylate groups). It is sold as a 55% solution in styrene with a typical viscosity of 400—700 mPa·s. DBS was added to this solution in the same manner as described for Examples 1 to 4. Viscosity data were collected after one hour, 17 hours and 11 days, and are tabulated in Table 2 in the same manner as in Table 1.

TABLE 2

| Example | % DBS | VI (1 Hr) | VI (17 Hr) | VI (19 days) |
|---|---|---|---|---|
| 6 | 0.15 | 700/670 = 1.0 | 1400/920 = 1.5 | 6600/2860 = 2.3 |
| 7 | 0.25 | 17600/3820 = 4.6 | 23800/6720 = 3.5 | 33200/10800 = 3.1 |
| 8 | 0.35 | 16000/5320 = 3.0 | 28000/9360 = 3.0 | 44800/15600 = 2.9 |

Examples 9 to 13

In Examples 9 to 13, the vinyl ester resin employed was Interplastic's CO—REZYN® VE—8300 (a biphenol-A-based vinyl ester resin having methacrylate groups). It is sold as a 55% solution in styrene with a typical viscosity of 400—600 mPa·s. DBS was added to this solution in the same manner as described for Examples 1 to 4. Viscosity data were collected after one hour, 20 hours and 20 days, and are tabulated in Table 3 in the same manner as in Table 1.

TABLE 3

| Example | % DBS | VI (1 Hr) | VI (20 Hr) | VI (20 days) |
|---|---|---|---|---|
| 9 | 0.15 | 530/550 = 1.0 | 800/710 = 1.1 | 1800/1340 = 1.3 |
| 10 | 0.25 | 700/585 = 1.2 | 2800/1720 = 1.6 | 18000/7450 = 2.4 |
| 11 | 0.35 | 8300/2625 = 3.2 | 32200/9100 = 3.5 | 33500/12500 = 2.7 |
| 12 | 0.50 | 24200/5560 = 4.4 | 41400/13600 = 3.0 | 47000/14100 = 3.3 |
| 13 | 1.00 | 22400/8280 = 2.7 | 34200/12300 = 2.8 | 77500/19950 = 3.9 |

Examples 14 to 16

In Examples 14 to 16, the vinyl ester resin employed was Dow's DERAKANE® RESIN 411—45. DBS was added to the resin in the same manner as described for Examples 1 to 4, but as a solution in dimethyl sulfoxide rather than dimethylformamide, to form a 25% solution of the thixotropy-imparting material in the resin. Viscosity information was collected after one hour, 17 hours and 20 days. The results are summarised in Table 4, in the same manner as in Table 1.

TABLE 4

| Example | % DBS | VI (1 Hr) | VI (17 Hr) | VI (20 days) |
|---|---|---|---|---|
| 14 | 0.15 | 670/700 = 1.0 | 1400/920 = 1.5 | 8400/2930 = 2.9 |
| 15 | 0.25 | 17600/3820 = 4.6 | 23800/6720 = 3.5 | 25900/7970 = 3.2 |
| 16 | 0.35 | 16000/5320 = 3.0 | 28000/9360 = 3.0 | 48600/12500 = 3.9 |

Examples 17 to 21

In these Examples, the improved resistance to solvents of a variety of cured vinyl ester resin samples containing DBS as a thixotropy-imparting material, in varying concentrations, is illustrated.

Samples were prepared by making a master batch of Epocryl® 322 which contained 0.25% cobalt naphthenate (8% Co) and 0.25% N,N-dimethylaniline. Example 17 was a control, no thixotropy-imparting material being added. For use in Examples 18 and 19, a 25% solution of DBS in dimethyl sulfoxide was prepared. For use in Examples 20 and 21, a 15% solution of DBS in dimethylformamide was prepared. The solution was added to the resin sample in each instance in an amount sufficient to provide the amount of DBS in the product resin given in Table 5.

The mixtures were stirred. 2.1%, with respect to the mixture, of LUBERSOL® DDM—9 (a 9% solution of methyl ethyl ketone peroxide in plasticiser, sold by the Lucidal Division of Pennwalt Corporation) were then added. After further stirring, the formulations were cast in a rod-shaped mould. After curing at room temperature for several hours, the bars were removed from the moulds and were post-cured in an oven at 50°C for 12 hours. After post-curing, discs were cut from the bars, polished slightly to remove rough edges and loose particles, and weighed prior to exposure to solvent. After immersion in water, acetic acid (HOAc) or acetone for 4 and 14 days, the samples were removed, dried to remove excess fluid and reweighed to determine weight gain. The weight gains (WG) given in Table 5 were calculated by dividing the difference in weight before and after solvent exposure by the initial weight, expressed as a percentage.

TABLE 5

| Example | % DBS | Solvent Exposure (days) | WG (water) | WG (HOAc) | WG (acetone) |
|---|---|---|---|---|---|
| 17 | Control | 4 | 0.40 | 2.08 | 1.27 |
| | | 14 | 0.54 | 4.25 | 2.12 |
| 18 | 0.07 | 4 | 0.44 | 1.69 | 1.05 |
| | | 14 | 0.53 | 3.40 | 2.00 |
| 19 | 0.2 | 4 | 0.41 | 1.65 | 1.21 |
| | | 14 | 0.57 | 3.43 | 1.77 |
| 20 | 0.07 | 4 | 0.43 | 1.63 | 1.05 |
| | | 14 | 0.54 | 3.57 | 1.57 |
| 21 | 0.2 | 4 | 0.33 | 1.38 | 0.84 |
| | | 14 | 0.53 | 2.08 | 1.40 |

**Claims**

1. A composition which comprises a vinyl ester resin made by condensing an epoxy resin and an ethylenically unsaturated monocarboxylic acid; and a thixotroping condensation product of a sugar alcohol and an aromatic aldehyde.

2. A composition according to claim 1 which additionally comprises a reactive, ethylenically unsaturated comonomer.

3. A composition according to claim 2, wherein the reactive comonomer is selected from styrene, chlorostyrene, vinyltoluenes, α-methylstyrene, diallyl phthalate, triallyl cyanurate, acrylate esters, methacrylate esters and divinylbenzenes.

4. A composition according to any preceding claim, which additionally comprises non-reactive diluent.

5. A composition according to any preceding claim, wherein the sugar alcohol is selected from pentahydric hexahydric and heptahydric alcohols, and the aromatic aldehyde is selected from benzaldehyde, ortho-, para- and meta-tolualdehyde, anisaldehyde and benzaldehydes having 1 to 3 ring substituents selected from amino groups, nitro groups and halogen atoms.

6. A composition according to any preceding claim, wherein the condensation product is selected from monobenzylidene sorbitol, dibenzylidene sorbitol and tribenzylidene sorbitol.

7. A composition according to any preceding claim, which comprises from 0.1 to 10% by weight of the condensation product.

8. A composition according to any preceding claim, wherein the epoxy resin is selected from BPA epoxy, epoxy novalac, tetraphenylolethane epoxy and cycloaliphatic epoxy resins, and the ethylenically unsaturated monocarboxylic acid is selected from acrylic acid, methacrylic acid, crotonic acid and cinnamic acid.

**Patentansprüche**

1. Eine Zusammensetzung, welche ein durch Kondensieren eines Epoxyharzes mit einer ethylenisch ungesättigten Monocarbonsäure gebildetes Vinylesterharz; und ein thixotropierendes Kondensationsprodukt aus einem Zuckeralkohol und einem aromatischen Aldehyd umfaßt.

2. Zusammensetzung nach Anspruch 1, welche zusätzlich ein reaktionsfähiges, ethylenisch ungesättigtes Comonomer umfaßt.

3. Zusammensetzung nach Anspruch 2, worin das reaktionsfähige Comonomer ausgewählt ist unter Styrol, Chlorstyrol, Vinyltoluolen, α-Methylstyrol, Diallylphthalat, Triallylcyanurat, Acrylatestern, Methacrylatestern und Divinylbenzolen.

4. Zusammensetzung nach einem der vorstehenden Ansprüche, welche zusätzlich ein nichtreaktionsfähiges Verdünnungsmittel umfaßt.

5. Zusammensetzung nach einem der vorstehenden Ansprüche, worin der Zuckeralkohol ausgewählt ist unter 5-wertigen, 6-wertigen und 7-wertigen Alkoholen und der aromatische Aldehyd ausgewählt ist unter Benzaldehyd, ortho-, para- und meta-Toluylaldehyd, Anisaldehyd und Benzaldehyden mit 1 bis 3 Ringsubstituenten, ausgewählt unter Aminogruppen, Nitrogruppen und Halogenatomen.

6. Zusammensetzung nach einem der vorstehenden Ansprüche, worin das Kondensationsprodukt ausgewählt ist unter Monobenzylidensorbit, Dibenzylidensorbit und Tribenzylidensorbit.

7. Zusammensetzung nach einem der vorstehenden Ansprüche, welche von 0,1 bis 10 Gew.-% Kondensationsprodukt enthält.

8. Zusammensetzung nach einem der vorstehenden Ansprüche, worin das Epoxyharz ausgewählt ist unter BPA-Epoxy-, Epoxy-Novalac-, Tetraphenylolethan-Epoxy- und cycloaliphatischen Epoxy-Harzen und die ethylenisch ungesättigte Monocarbonsäure ausgewählt ist unter Acrylsäure, Methacrylsäure, Crotonsäure und Zimtsäure.

**Revendications**

1. Composition caractérisée en ce qu'elle comprend une résine vinylester faite par condensation d'une résine époxy et d'un acide monocarboxylique insaturé par des groupes éthylènes, et un produit conférant la thixotropie obtenue par condensation d'un sucre alcoolique et d'une aldéhyde aromatique.

2. Composition selon la revendication 1, caractérisée en ce qu'elle comprend également un comonomère réactif insaturé par des groupes éthylènes.

3. Composition selon la revendication 2, caractérisée en ce que le comonomère réactif est choisi parmi le styrène, le chlorostyrène, les vinyltoluènes, l'α-méthylstyrène, le phthalate de diallyle, le cyanurate de triallyle, les esters acrylates, les esters méthacrylates et les divinylbenzènes.

4. Composition selon l'une des revendications précédentes, caractérisée en ce qu'elle comprend également un diluant non réactif.

5. Composition selon l'une des revendications précédentes, caractérisée en ce que le sucre alcoolique est choisi parmi les alcools pentahydriques, hexahydriques et heptahydriques et en ce que l'aldéhyde aromatique est choisi parmi la benzaldéhyde, l'ortho-, la para- et la méta-tolualdéhyde, l'anisaldéhyde et

les benzaldéhydes ayant des substituants de 1 à 3 cycles choisis parmi les groups amino, les groupes nitro et les atomes d'halogènes.

6. Composition selon l'une des revendications précédentes, caractérisée en ce que le produit de condensation est choisi parmi le monobenzylidène sorbitol, le dibenzylidène sorbitol et le tribenzylidène sorbitol.

7. Composition selon l'une des revendications précédentes, caractérisée en ce qu'elle comprend de 0,1 à 10% en poids du produit de condensation.

8. Composition selon l'une des revendications précédentes, caractérisée en ce que la résine époxy est choisie parmi les résines époxy BPA, novalac époxy, époxy tétraphényloléthane et époxy cycloaliphatique, et en ce que l'acide monocyclique insaturé comprenant des groupes éthylènes est choisi parmi l'acide acrylique, l'acide méthacrylique, l'acide crotonique et l'acide cinnamique.